# EUROPÄISCHE PATENTSCHRIFT

(11) **EP 3 499 081 B1**
(45) Veröffentlichungstag und Bekanntmachung des Hinweises auf die Patenterteilung: **07.12.2022**
(21) Anmeldenummer: 18199025.0
(22) Anmeldetag: 08.10.2018
(51) Int. Cl.: F16F 9/04, B60G 11/28, F16F 9/54, F16F 9/05

(54) **LUFTFEDER**
PNEUMATIC SPRING
RESSORT PNEUMATIQUE

(30) Priorität: 13.12.2017 DE 102017222588
(43) Veröffentlichungstag der Anmeldung: 19.06.2019
(73) Patentinhaber: ContiTech Luftfedersysteme GmbH, 30165 Hannover (DE)
(72) Erfinder: Stahmer, Reinhard, 31535 Neustadt am Rübenberge (DE); Balachonzew, Boris, 30823 Garbsen (DE); Einhorn, Henrik, 30163 Hannover (DE)
(74) Vertreter: Continental Corporation

(56) Entgegenhaltungen:
- EP-A2- 2 775 162
- US-A- 3 033 558
- US-A1- 2006 273 501

## Beschreibung

Die Erfindung betrifft eine Luftfeder, die mit einem Luftfederdeckel und einem Luftfederkolben zwischen zwei gegeneinander abgefederten Bauteilen eingespannt ist, und die einen elastischen Luftfederbalg aufweist, der mit seinen beiden offenen Enden an dem Luftfederdeckel beziehungsweise an dem Luftfederkolben dichtend befestigt ist, einen mit Druckluft gefüllten Arbeitsraum wenigstens teilweise begrenzt und unter Ausbildung wenigstens einer Rollfalte an dem Luftfederkolben abrollt, wobei zumindest ein Ende des Luftfederbalgs als ein Wulst ausgebildet ist, welcher in einem den Arbeitsraum gegenüber dem Luftfederdeckel dichtenden Sitz angeordnet ist.

Luftfedereinrichtungen, kurz auch Luftfedern genannt, sind in einer Vielzahl von Ausführungen für Anwendungen in verschiedenen Bereichen bekannt. Eingespannt zwischen Fahrwerk und Karosserie werden sie beispielsweise häufig in Straßen- oder Schienenfahrzeugen eingesetzt, um eine komfortable Federung zu erreichen. Im Fahrzeugbereich werden sie außerdem für Kabinenlagerungen und Sitzfederungen verwendet.

Eine derartige Luftfeder weist einen Luftfederbalg auf, an dessen beiden offenen Enden meistens jeweils ein Wulst ausgebildet ist, mittels denen der Luftfederbalg an den Luftfederbauteilen Luftfederdeckel und Luftfederkolben befestigt ist, wobei der Luftfederbalg einen mit Druckluft gefüllten Arbeitsraum begrenzt. Die Luftfeder steht im Betrieb unter einem inneren Überdruck, wobei der Luftfederbalg unter Last und bei Federbewegungen unter Bildung einer Rollfalte auf einer Außenkontur des Luftfederkolbens abrollt. Der Luftfederdeckel befindet sich üblicherweise, in der Gebrauchslage der Luftfeder gesehen, oben auf dem Balg, der Luftfederkolben unten. Im Falle einer Fahrgestell-Luftfeder ist der Luftfederdeckel die Schnittstelle zum Fahrzeugrahmen, zum Aufbau oder zum Chassis. Der Luftfederkolben stellt die Schnittstelle zur Fahrzeugachse dar. Das in Gebrauchslage der Luftfeder obere Anschlussbauteil, also der Luftfederdeckel, ist üblicherweise eine aus Stahlblech oder aus glasfaserverstärktem Kunststoff gefertigte Platte. Diese Befestigungsplatte wird beispielsweise an einem Träger eines Fahrzeugrahmens oder direkt am Chassis befestigt. Um einen dichten Sitz eines Endes des Luftfederbalgs an einem Anschlussbauteil der Luftfeder zu erreichen, sind verschiedene abdichtende Anschlussarten bekannt.

Eine bekannte Befestigung eines Endes des Luftfederbalgs an einem Anschlussbauteil erfolgt durch Bördeln. Die DE 41 41 156 A1 und die DE 44 23 885 A1 zeigen beispielsweise Luftfedern, bei denen das in der Gebrauchslage der Luftfeder obere Anschlussbauteil, also der Luftfederdeckel, als eine Bördelplatte ausgebildet ist. Ein Wulst des Luftfederbalgs ist von einem gebördelten Rand des als Bördelplatte ausgebildeten Luftfederdeckels umfasst und dicht verspannt. Die Dichtheit eines gebördelten Sitzes des Wulstes muss beim Herstellen der Befestigung erzeugt werden und dann dauerhaft gewährleistet sein. Der umbördelte Bereich des Balgs ist zum Abrollen des Balgs im Betrieb nicht nutzbar, wodurch ein Teil des Federwegs verloren geht. Der Bördelprozess erfordert eine Presse und ist relativ energieintensiv. Bei einer Bördelplatte aus einem beschichteten Material, wie beispielsweise beschichtetem Stahl, besteht im Umformbereich die Gefahr der Beschädigung der Beschichtung durch das Bördelwerkzeug mit einer nachfolgenden Korrosion in diesem Bereich. Die einmal hergestellte Bördelverbindung zwischen Bördelplatte und Balg ist nur durch Zerstören wieder demontierbar, wodurch eine sortenreine Trennung bei der Entsorgung nach dem Ende der Lebensdauer der Luftfeder erschwert wird.

Eine andere bekannte Befestigung eines Endes des Luftfederbalgs an einem Anschlussbauteil erfolgt durch Einklemmen und/oder Verspannen. Aus der DE 10 2013 206 235 A1 ist eine Luftfeder bekannt, bei der ein Endbereich des Luftfederbalgs mittels eines Spannrings an einem Klemmabschnitt des Luftfederdeckels befestigt ist. Um die Gefahr eines Herausziehens des Luftfederbalgs aus der Klemmverbindung zu beseitigen und die Dichtigkeit der Klemmverbindung sicherzustellen, sind in dem Klemmabschnitt mehrere umlaufende Nuten ausgebildet, in welche das Material des Luftfederbalges beim Verpressen des Spannrings eindringt. Zusätzlich ist ein weiterer Ring zur Entlastung des Spannringes im Endbereich des Luftfederbalges außerhalb des Klemmabschnittes angeordnet. An einem durch derartiges Einspannen befestigten Luftfederbalg entsteht im Betrieb an dem eingespannten Bereich eine hohe Zugbelastung, so dass in der Regel Spannringe aus Stahl erforderlich sind, um den Balg zu halten. Setzt sich jedoch das eingeklemmte Gummi des Balgs im Bereich der Spannringe im Laufe der Betriebsdauer, kann es hier zu Undichtigkeiten und zum Lösen des Spannrings kommen. Ein beschichteter Spannring kann durch das Einsetzen von Klemmbacken in die Klemmverbindung an der Oberfläche beschädigt werden und korrodieren. Eine zerstörungsfreie Demontage sowie eine sortenreine Trennung nach Ende der Lebensdauer sind nicht möglich beziehungsweise erschwert.

Aus der DE 100 50 77 A1 ist eine Luftfeder bekannt, bei der an dem Luftfederdeckel ein Klemmsitz ausgebildet ist, an dem mittels eines Klemmrings ein Ende des Luftfederbalgs befestigt ist. Im Bereich des Klemmsitzes weist der Luftfederdeckel einen konvex ausgebildeten Klemmbereich auf, auf welchem ein konkav ausgebildeter Klemmring aufgepresst ist. Die Fertigung einer derartigen Befestigung erlaubt nur enge Toleranzen. Durch ein Setzen des Balggummis im Betrieb kann es zu Undichtheit und Lösen der Klemmbefestigung kommen. Ein berücksichtigter möglicher Setzweg auf dem konischen Bereich verringert den freien Federweg des Balgs. Durch die hohe Zugbelastung ist im Bereich des eingeklemmten Wulstes des Balgs in der Regel die Nutzung eines geschlossenen Stahlkerns unumgänglich.

Außerdem ist es bekannt, einen Luftfederbalg anstatt durch Bördelungen einer Platte oder durch Klemmen beziehungsweise Spannen eines Ringes mittels eines Dichtsitzes eines Balgwulstendes an einem Befestigungsteil zu halten. Die DE 40 11 517 C2 zeigt einen Luftfederbalg mit einem endseitigen ringförmigen Wulst, der mittels eines Befestigungsrings an einer Konsole eines Wagenkastens eines Schienenfahrzeugs befestigt ist. Der Befestigungsring weist einen rillenförmigen Sitz für einen ringförmigen Wulst des Luftfederbalgs auf. Die Sitzfläche ist radial innen geschlossen, so dass der Wulst kragenförmig am Ende des Luftfederbalgs umgelegt werden muss, um ihn in den Sitz einzulegen, während an der Konsolenwand des Wagenkastens nicht der Wulst sondern nur die Innenseite der Balgwand anliegt. Die Konsole ist an der Ausbildung des Sitzes des Wulstes nicht beteiligt. Der Wulst ist lediglich einseitig gegen Abziehen durch Zugkräfte im Betrieb gesichert. Die DE 1 285 792 A zeigt eine Luftfeder, bei der sich ein Wulst an einem Ende des Luftfederbalgs mit der balgäußeren Seite an einer etwa senkrecht zur Hauptachse der Luftfeder verlaufenden Deckplatte und mit der balginneren Seite an einer mit dieser Deckplatte verschraubbaren Scheibe abstützt, wobei die Scheibe mit einer den Wulst übergreifenden radialen Verbreiterung versehen ist. Die Scheibe weist an ihrem äußeren Umfang eine konische, sich zum Balginneren hin erweiternde Sitzfläche für den Balgwulst auf. Der konische Sitz wirkt nur auf die radial innere Seite des Wulstes. Ein derartiger konischer Dichtsitz weist keine hohe Sicherheit gegen ein Abziehen des Balgs im Betrieb bei großen Belastungen auf.

Schließlich zeigt die DE 1 078 882 B eine Luftfeder mit einem konischen Sitz eines Endes eines Luftfederbalgs, bei dem eine radial außenliegende konische Fläche eines Wulstes des Balgs an einer konischen, mit der Hauptachse des Balgs einen spitzen Winkel bildende Sitzfläche an der Innenseite eines den Balg tragenden topfförmigen Bauteils anliegt. Das topfförmige Bauteil ist mit einem Fahrzeugobergestell verbunden. Eine zu der Wulstau-ßenfläche benachbarte radial innengelegene konische Fläche des Wulstes steht mit einem Stützring in Wirkverbindung, dessen dem Balg zugewandte Fläche ebenfalls konisch verläuft, so dass der Wulst formschlüssig an dem konischen Sitz anliegt. In den Wulst ist ein ringförmiger Kern mit einem ebenfalls konischen Querschnitt eingebettet, welcher zur Verankerung eines in die Balgwände eingelegten Verstärkungsgewebes dient. Der Kernring muss eine hohe Strukturfestigkeit aufweisen, um die Verstärkungseinlage zu tragen und zugleich ein Lockern des konischen Sitzes des Wulstes zu verhindern. Andererseits muss der Balgrand bei der Montage im Durchmesser etwas nachgegeben, um den Rand in das topfförmige Bauteil einführen und den Stützring anbringen zu können. Die Herstellung eines derartigen Balgs mit konischem Ende und dessen Montage ist aufwendig und erlaubt nur geringe Fertigungstoleranzen. Weiterhin offenbart EP 2 775 162 A2 eine Luftfeder entsprechend dem Oberbegriff des Anspruchs 1.

Vor diesem Hintergrund lag der Erfindung die Aufgabe zugrunde, eine Luftfeder der eingangs genannten Art vorzustellen, bei der die beschriebenen Nachteile weitgehend vermieden sind und die betriebssicher sowie kostengünstig in der Herstellung ist. Insbesondere soll ein Ende des Luftfederbalgs selbstarretierend und mit selbstverstärkender Dichtwirkung an einem Luftfederdeckel oder dergleichen Anschlussbauteil der Luftfeder befestigbar sein. Insbesondere soll eine solche Luftfeder für den Einsatz in Luftfedersystemen von Straßenfahrzeugen, Schienenfahrzeugen und industriellen Anwendungen geeignet sein.

Die Lösung dieser Aufgabe wurde mit einer Luftfeder erreicht, welche die Merkmale des unabhängigen Patentanspruchs aufweist. Vorteilhafte Ausgestaltungen und Weiterbildungen der Erfindung sind in den abhängigen Ansprüchen definiert.

Die Erfindung ging von der Erkenntnis aus, dass die gestiegenen Belastungen und Komfortansprüche an Luftfedern einer verbesserten endseitigen Befestigung des Balgwulstes des Luftfederbalgs an dem in Gebrauchslage obenliegenden Anschlussteil und einer sicher druckfesten und zugfesten Abdichtung des Arbeitsraumes im Balginneren bedürfen. Dies kann konstruktiv durch eine modifizierte Gestaltung des Dichtsitzes für den Wulst unter Einbeziehung des Anschlussteils selbst und mit selbstdichtenden Eigenschaften der Dichtung im Betrieb ermöglicht werden.

Die Erfindung geht daher aus von einer Luftfeder, die mit einem Luftfederdeckel und einem Luftfederkolben zwischen zwei gegeneinander abgefederten Bauteilen eingespannt ist, und die einen elastischen Luftfederbalg aufweist, der mit seinen beiden offenen Enden an dem Luftfederdeckel beziehungsweise an dem Luftfederkolben dichtend befestigt ist, einen mit Druckluft gefüllten Arbeitsraum wenigstens teilweise begrenzt und unter Ausbildung wenigstens einer Rollfalte an dem Luftfederkolben abrollt, wobei zumindest ein Ende des Luftfederbalgs als ein Wulst ausgebildet ist, welcher in einem den Arbeitsraum gegenüber dem Luftfederdeckel dichtenden Sitz angeordnet ist.

Zur Lösung der gestellten Aufgabe sieht die Erfindung bei dieser Luftfeder vor, dass der Wulst des Luftfederbalgs im Axialschnitt der Luftfeder zumindest teilweise kreisförmig ausgebildet ist, dass der Luftfederdeckel ein Luftfederdeckelteilstück aufweist, welches in Axialrichtung der Luftfeder verläuft, dass ein Verschlusselement angeordnet ist, welches axial innerhalb des Luftfederdeckels und radial benachbart zu dem Luftfederdeckelteilstück angeordnet ist, dass der Wulst mittelbar oder unmittelbar mittels des Verschlusselements gegen den Luftfederdeckel und/oder gegen das Luftfederdeckelteilstück gespannt wird und dass der Sitz für den Wulst als ein zweiteiliger, durch das Verschlusselement und das Luftfederdeckelteilstück zusammen gebildeter, zumindest teilweise kreisförmiger Sitz ausgebildet ist, wobei das Verschlusselement und das Luftfederdeckelteilstück eine Sitzfläche mit einer im Axialschnitt der Luftfeder abschnittsweise kreissegmentförmigen Kontur aufweist.

Hierdurch wird eine selbstdichtende und sich selbst festziehende Befestigung des Luftfederbalgs am Luftfederdeckel erreicht, welche den Balg gegen unbeabsichtigtes Abziehen von dem Luftfederdeckel sichert. Die Montage des Luftfederbalgs ist im Vergleich zu Befestigungen wie Bördeln einfacher und kostengünstiger. Die hier vorgeschlagene Befestigung ist zerstörungsfrei wieder demontierbar. Der Wulst des Luftfederbalgs kann in herkömmlicher Weise als ein einfacher Ringwulst mit kreisförmigem Querschnitt ausgeführt sein. Eine aufwendige konische Gestaltung des Wulstes ist nicht notwendig.

Demnach ist der Sitz des Wulstes des Luftfederbalgs zweiteilig ausgebildet. Neben dem Luftfederdeckel wird ein Verschlusselement, wie eine Scheibe oder ein Ring, zur Bildung des zweiteiligen Sitzes für den Wulst verwendet. Diese beiden Teile können durch eine Befestigung miteinander kraft- oder formschlüssig verbunden werden. Dies ist aber für die Funktionsfähigkeit des Sitzes nicht zwingend notwendig. Im Betrieb der Luftfeder wird eine Zugbelastung auf den Balg beziehungsweise auf einen eingebetteten Festigkeitsträger des Balgs erzeugt, wodurch ein Festziehen des Wulstes in dem Sitz bewirkt wird. Dadurch entsteht eine selbstverstärkende Abdichtung des Arbeitsraumes im Balginneren nach außen. Dadurch, dass der Sitz für den Wulst abschnittweise kreissegmentförmig konturiert ist, wird jedoch bei dem Festziehen des Wulstes in dem Sitz keine reine Keilwirkung erzeugt, sondern eine demgegenüber gleichmäßigere Krafteinleitung auf den Wulst begünstigt. Ein Setzen des Wulstes in dem Sitz, was den Federweg verringert und oft bei rein konischen Dichtsitzen auftritt, kann somit weitgehend vermieden werden. Die zweiteilige Ausbildung des Sitzes sichert den Wulst gegen Abziehen bei Zugbelastung sowohl radial außen als auch radial innen, wodurch die notwendige Betriebssicherheit gewährleistet wird.

Die Luftfeder gemäß der Erfindung ist für eine Vielzahl von Anwendungen vorteilhaft geeignet, insbesondere im Fahrzeugbereich, wie Achsfederungen, Kabinenlagerungen, Fahrersitzfederungen von Kraftfahrzeugen oder Schienenfahrzeugen, aber auch in industriellen Anwendungen.

Gemäß der Erfindung ist vorgesehen, dass sowohl das Verschlusselement als auch das Luftfederdeckelteilstück jeweils eine Sitzfläche mit einer im Axialschnitt des Luftfederkörpers abschnittsweise kreissegmentförmigen Kontur aufweisen. Dadurch kann sich der Wulst radial innen und radial außen in den Sitz schmiegen. Der Wulst ist dadurch besonders effektiv gegen Abziehen gesichert und dichtet den Arbeitsraum im Balginneren besonders zuverlässig ab. Grundsätzlich ist aber auch ein radial einseitig angeordnetes Wulstbett mit nur einer abschnittsweise kreissegmentförmigen Kontur bereits in der Lage, den Wulst sicher und dichtend in dem Wulstsitz zu halten, da das Verschlusselement und ein Luftfederdeckelteilstück zur Bildung des Sitzes für den Wulst zusammenwirken und der Wulst über das Verschlusselement im Betrieb gegen den Luftfederdeckel gepresst werden kann.

Entsprechend einer nicht beanspruchten Ausführungsform ist vorgesehen, dass die Konturen der Sitzflächen des Sitzes für den Wulst nach radial innen oder nach radial außen offen verlaufen. Eine radial innen oder radial außen offen verlaufende Wulstsitzfläche ist durch die zweiteilige Ausbildung des Wulstsitzes möglich, ohne die Funktionalität zu beeinträchtigen. Dadurch können die Montage des Luftfederbalgs in dem Sitz sowie die Halterung des Balgs am Luftfederdeckel mittels des Verschlusselements bei der Montage erleichtert sein.

Außerdem kann entsprechend einer nicht beanspruchten Ausführungsform vorgesehen sein, dass der Wulst des Luftfederbalgs einen eingelegten ringförmigen Kern aufweist, der hinsichtlich einer Ringgeometrie offen oder geschlossen ausgebildet ist, der im Querschnitt kreisförmig, rechteckig, dreieckig oder keilförmig ausgebildet ist und der optional mit einem in der Balgwand des Luftfederbalgs eingelegten Festigkeitsträger verbunden ist, wobei der Kern des Wulstes und/oder der Festigkeitsträger der Balgwand und/oder das den Wulst mittelbar oder unmittelbar gegen den Luftfederdeckel und/oder gegen das Luftfederdeckelteilstück spannende Verschlusselement aus Metall und/oder aus Kunststoff und/oder aus Elastomer besteht.

Die Einzelteile der Anordnung, welche im Wesentlichen der Luftfederdeckel, das Verschlusselement und der Luftfederbalg sind, können demnach aus unterschiedlichen, beziehungsweise aus verschiedenen Materialien gefertigt sein oder mit verschiedenen Materialien verstärkt sein. Für den Luftfederdeckel kommen beispielsweise Metalle wie Stahl oder Aluminium oder Kunststoffe mit oder ohne Glasfaserverstärkung in Betracht. In den Luftfederbalg kann beispielsweise ein Gewebe als Festigkeitsträger eingelegt sein. Meistens wird in den Wulst ein Wulstkern eingelegt, welcher beispielsweise aus einem torusförmigen Volldrahtkern aus Stahl bestehen kann, der besonders belastbar ist. Ein solcher Wulstkern aus Stahl ist jedoch nicht zwingend notwendig. Die Erfindung erlaubt vorteilhaft ebenso einen Wulstkern aus Elastomer für einen betriebssicheren und haltbaren Wulst. Dadurch kann Gewicht eingespart und eine Korrosion des Kerns ausgeschlossen werden. Der Wulstkern kann alternativ zu einem einfachen Ring beispielsweise eine keilförmige oder rechteckige Querschnittform aufweisen. Die Herstellung des Wulstes mit Kern kann beispielsweise erfolgen, indem der Wulst als eine Schlaufe von mehreren Lagen, welche um einen eingelegten Kern umgelegt und anschließend vulkanisiert werden, gefertigt wird. Der Kern kann als umfänglich geschlossener oder offener Kern in den Wulst eingelegt sein, um bestimmte Elastizitätseigenschaften des Wulstes zu erreichen oder zu begünstigen. Zudem kann das beispielsweise ringförmige oder scheibenförmige Verschlusselement ebenfalls vorteilhaft aus einem Elastomer bestehen, um beispielsweise wie ein Stopfen eingesetzt zu werden und/oder um Gewicht einzusparen.

Gemäß der Erfindung ist vorgesehen, dass der Luftfederdeckel ein radial innerhalb des Luftfederbalgs angeordnetes napfförmiges erstes Luftfederdeckelteilstück aufweist, an dem eine erste kreissegmentförmig konturierte Sitzfläche ausgebildet ist, an welche sich die radiale Innenseite des Wulstes schmiegt, und dass ein erstes Verschlusselement als ein Verschlussring ausgebildet ist, der radial außerhalb des Luftfederbalgs angeordnet ist und an dem eine zweite kreissegmentförmig konturierte Sitzfläche ausgebildet ist, an welche sich die radiale Außenseite des Wulstes schmiegt. Demnach kann der Luftfederdeckel abschnittsweise napfförmig mit einer Hinterschneidung zur Bildung einer ersten Sitzfläche des Sitzes für den Wulst ausgebildet sein. Grundsätzlich ist es möglich, die napfförmige Vertiefung in dem Deckel auszufüllen, so dass an der Außenseite des Luftfederdeckels eine durchgehend ebene Fläche entsteht beziehungsweise erhalten bleibt. Die radial innere Sitzfläche für den Wulst am napfförmigen Luftfederdeckelteilstück weist die Gestalt eines Felgenhorns auf. Das als Verschlussring ausgebildete Verschlusselement ist zur Bildung einer zweiten Sitzfläche für den Wulst ebenfalls mit einer Hinterschneidung versehen. Daraus ergibt sich ein zweiteiliger, kreissegmentförmig konturierter Wulstsitz, wobei die Sitzfläche des zusammengesetzten Sitzes durch die hindurch ragende Balgwand unterbrochen ist. Der Luftfederbalg ist mit seinem Wulst in diesem Sitz angeordnet, wobei der Wulst einen in das Material vulkanisierten Kern, beispielsweise aus Stahl oder aus Polyamid (PA) aufweisen kann, welcher in Umfangsrichtung offen, dehnbar oder nicht dehnbar ausgeführt sein kann.

Das in dieser Ausführung als Verschlussring beziehungsweise Stützring ausgebildete sowie wirksame Verschlusselement kann unter dem im Arbeitsraum des Balgs herrschenden Innendruck unter Bildung einer Falte des als Rollbalg ausgebildeten Luftfederbalgs gegen den Luftfederdeckel gedrückt werden. Der Wulst kann jedoch auch durch Verspannen des Verschlussrings selbst, mit Unterstützung des Balginnendrucks, auf das Felgenhorn des Luftfederdeckels gezogen werden. Der Wulst wird dadurch in seinem Sitz festgelegt und der Arbeitsraum dauerhaft abgedichtet. Der Außendurchmesser des Verschlussrings kann verbreitert sein, um ein Verdrillen des Ringes unter der im Betrieb auf den Luftfederbalg wirkenden Zugkraft sicher zu vermeiden und damit die Gefahr eines Öffnens des Wulstsitzes auch unter überhöhten Belastungen zuverlässig auszuschließen.

Gemäß einer dazu alternativen nicht beanspruchten Ausführungsform kann vorgesehen sein, dass der Luftfederdeckel ein radial innerhalb des Luftfederbalgs angeordnetes napfförmiges erstes Luftfederdeckelteilstück aufweist, und dass ein erstes Verschlusselement als ein Verschlussring ausgebildet ist, der radial außerhalb des Luftfederbalgs angeordnet ist, wobei entweder an dem Luftfederdeckelteilstück eine erste kreissegmentförmig konturierte Sitzfläche ausgebildet ist, an welche sich die radiale Innenseite des Wulstes schmiegt, oder an dem als ein Verschlussring ausgebildeten Verschlusselement eine zweite kreissegmentförmig konturierte Sitzfläche ausgebildet ist, an welche sich die radiale Außenseite des Wulstes schmiegt.

Demnach kann entweder an dem Luftfederdeckelteilstück oder an dem als ein Verschlussring ausgebildeten Verschlusselement auf eine Hinterschneidung verzichtet werden, wodurch eine der beiden Sitzflächen für den Wulstsitz entfällt. Dabei wird immer noch eine hinreichende Abdichtung des Sitzes ermöglicht, jedoch mit Einbußen bei der Absicherung gegen ein Abziehen des Wulstes aus dem Sitz. Der Vorteil dieser Ausführungsform ist eine leichtere Montage, wodurch Kosten eingespart werden können. Diese Anordnung ist somit für Luftfedern, welche im Betrieb geringeren Zugkräften ausgesetzt sind, zweckmäßig und vorteilhaft geeignet.

Gemäß einer weiteren Ausführungsform der Erfindung kann vorgesehen sein, dass am Außenumfang des Luftfederdeckels ein umlaufender Clips- oder Bördelrand ausgebildet ist, welcher das als Verschlussring ausgebildete Verschlusselement radial außen formschlüssig hintergreift. Dadurch ist das als Verschlussring ausgebildete Verschlusselement im montierten Zustand mit dem Luftfederdeckel verbunden und gegen ein Lösen von dem Wulst zuverlässig gesichert.

Eine andere Weiterbildung der Erfindung sieht vor, dass am Außenumfang des Luftfederdeckels ein hohlzylindrischer Schutzstutzen angeordnet und mit dem Luftfederdeckel fest verbunden ist, wobei der Schutzstutzen in Axialrichtung der Luftfeder verläuft und das als Verschlussring ausgebildete Verschlusselement in sich aufnimmt. Demnach kann alternativ zu einer Befestigung des als Verschlussring ausgebildeten Verschlusselements am Luftfederdeckel mittels eines Clips- oder Bördelrandes am Luftfederdeckel ein Schutzstutzen befestigt sein, welcher beispielsweise aus Äthylen-Propyläen-Dien-Kautschuk (EPDM) gefertigt sein kann. Dieser Schutzstutzen kann beispielsweise radial innen mit einem gabelförmigen Ende den radial äußeren Rand des Luftfederdeckels form- und kraftschlüssig umgreifen und an den Verschlussring angeformt sein, welcher beispielswese aus Polyamid oder einem glasfaserverstärkten Kunststoff gefertigt sein kann. Dadurch ist der Verschlussring in seiner vorgesehenen Position gesichert. Der Mantel des Luftfederbalgs, insbesondere daran ausgebildete Balgfalten, ist dadurch zusätzlich gegen Eintragungen von äußeren Verschmutzungen geschützt.

Gemäß einer weiteren Ausführungsform der Erfindung kann vorgesehen sein, dass der Luftfederdeckel ein radial außerhalb des Luftfederbalgs angeordnetes, den Wulst hakenförmig mit einem zwischenliegenden Freiraum umgreifendes zweites Luftfederdeckelteilstück aufweist, und dass ein zweites Verschlusselement als eine Verschlussscheibe ausgebildet ist, welche radial innerhalb des Luftfederbalges angeordnet ist und an der eine dritte kreissegmentförmig konturierte Sitzfläche ausgebildet ist, an welche sich die radiale Innenseite des Wulstes schmiegt.

Demnach kann anstelle eines radial außen angeordneten Verschlussrings eine radial innen angeordnete Verschlussscheibe vorgesehen sein, welche axial innen an dem Luftfederdeckel anliegt. Die Oberfläche an der Außenseite des Luftfederdeckels bleibt dadurch vorteilhaft unverändert erhalten, beispielsweise als eine durchgehend ebene Fläche. Die Verschlussscheibe weist zur Bildung einer kreissegmentförmigen Sitzfläche für den Wulst eine Hinterschneidung auf. Die Verschlussscheibe nimmt dadurch mit deren radial äußeren Umfangsfläche eine Glockenform an. Durch den Balginnendruck wird die Verschlussscheibe sowie durch diese der Wulst des Balgs gegen den Luftfederdeckel gedrückt und in seinem Sitz gesichert. Dadurch ist der Arbeitsraum des Balgs abgedichtet.

Das zuletzt genannte Ausführungsbeispiel kann vorteilhaft noch dadurch verbessert sein, dass sich die kreissegmentförmig konturierte Sitzfläche für den Wulst zum Luftfederdeckel hin mit einer zusätzlichen Hinterschneidung erstreckt.

Durch den axial beidseitig hinterschnittenen Wulstsitz kann das als Verschlussscheibe ausgebildete Verschlusselement als ein Stopfen wirken, der auch selbständig ohne den Innendruck aus dem Arbeitsraum des Luftfederbalgs an dem Luftfederdeckel gehalten wird und seinerseits den Wulst in seinen Sitz presst, sofern der Wulst einen in Umfangsrichtung offenen oder dehnbaren Kern aufweist und/oder die Verschlussscheibe aus einem elastischen Material gefertigt ist.

Schließlich kann gemäß einer anderen Ausführungsform der Erfindung vorgesehen sein, dass der Luftfederdeckel ein radial außerhalb des Luftfederbalgs angeordnetes, als separates Bauteil ausgebildetes und mit dem Luftfederdeckel verbundenes drittes Luftfederdeckelteilstück aufweist, an dem eine vierte kreissegmentförmig konturierte Sitzfläche ausgebildet ist, an welche sich die radiale Außenseite des Wulstes schmiegt.

Demnach kann die Luftfederanordnung am luftfederdeckelseitigen Ende vorteilhaft dreiteilig ausgeführt sein, mit einem Luftfederdeckel und mit einem als Verschlussscheibe ausgebildeten radial innen angeordneten Verschlusselement für den Wulst, wobei der Luftfederdeckel durch zwei separate Bauteile gebildet ist. Der Luftfederdeckel weist demnach eine einfach Deckplatte zum Anschluss an ein Chassis oder dergleichen sowie ein axial unter der Deckplatte zum Luftfederbalg hin angeordnetes Luftfederdeckelteilstück als separates Bauteil auf, welches als ein zweites Verschlusselement in Form eines Verschlussringes für den Wulst wirksam ist.

Die Erfindung wird nachstehend anhand von in der beigefügten Zeichnung dargestellten Ausführungsbeispielen näher erläutert. In der Zeichnung zeigt
- Fig. 1: einen Ausschnitt eines Axialschnitts durch eine Luftfeder gemäß einer ersten Ausführungsform der Erfindung, mit einem Luftfederdeckelteilstück eines Luftfederdeckels und einem Verschlussring mit je einer kreissegmentförmigen Sitzfläche für einen Sitz eines Wulst eines Luftfederbalgs,
- Fig. 2: einen Ausschnitt eines Axialschnitts durch eine Luftfeder gemäß einer zweiten Ausführungsform der Erfindung, mit einem Clips- oder Bördelrand am Luftfederdeckel,
- Fig. 3: einen Ausschnitt eines Axialschnitts durch eine Luftfeder gemäß einer dritten Ausführungsform der Erfindung mit einem Schutzstutzen am Luftfederdeckel,
- Fig. 4: einen Ausschnitt eines Axialschnitts durch eine Luftfeder gemäß einer vierten Ausführungsform der Erfindung, mit nur einer kreissegmentförmigen Sitzfläche für den Wulst,
- Fig. 5: einen Ausschnitt eines Axialschnitts durch eine Luftfeder gemäß einer fünften nicht beanspruchten Ausführungsform, mit einer Verschlussscheibe,
- Fig. 6: einen Ausschnitt eines Axialschnitts durch eine Luftfeder gemäß einer sechsten nicht beanspruchten Ausführungsform, mit einer axial beidseitigen Hinterschneidung an der Verschlussscheibe, und
- Fig. 7: einen Ausschnitt eines Axialschnitts durch eine Luftfeder gemäß einer siebten nicht beanspruchten Ausführungsform, mit einem zweiteiligen Luftfederdeckel.

Einige Bauelemente in den Figuren stimmen in ihrem Aufbau und/oder in ihrer Funktion überein, so dass sie zur Vereinfachung mit denselben Bezugsziffern bezeichnet sind.

Der Aufbau und die Funktionsweise einer Luftfeder sind an sich bekannt. Beispielsweise sei dazu auf die DE 10 2016 100 939 A1 sowie auf die bereits eingangs erwähnte DE 1 285 792 A verwiesen. Die Figuren beschränken sich daher zur Vereinfachung jeweils lediglich auf einen Ausschnitt eines Axialschnitts (Längsschnitts) durch eine zylindrische Luftfeder, welche mit ihrer Symmetrieachse (Längsachse 14) mit einem nicht dargestellten Luftfederkolben und einem Luftfederdeckel senkrecht, beispielsweise zwischen einem Fahrwerk und einer Fahrzeugkarosserie eines Kraftfahrzeugs, eingespannt ist.

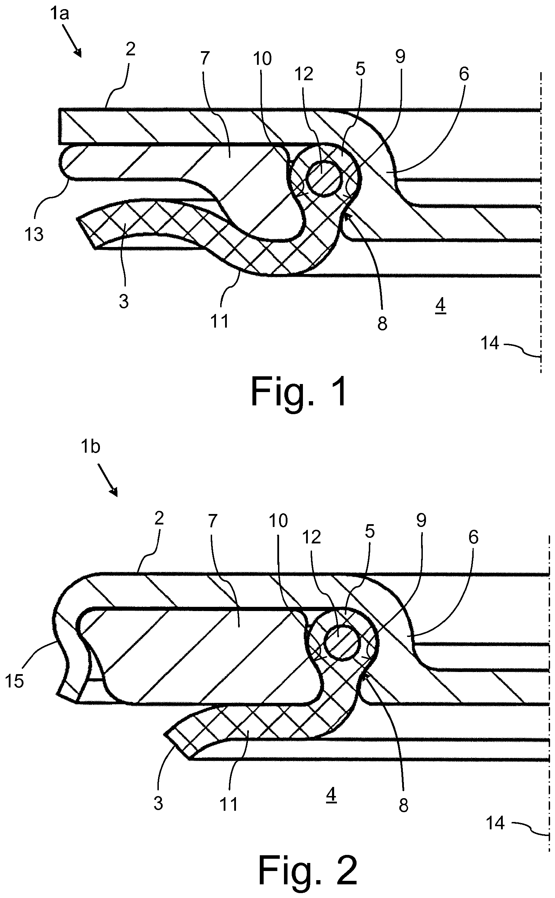

Demnach weist eine in Fig. 1 ausschnittsweise dargestellte erste Luftfeder 1a einen Luftfederdeckel 2 auf, an welchem ein Luftfederbalg 3 dichtend befestigt ist. Der Luftfederbalg 3 ist aus einem Elastomer hergestellt und begrenzt einen mit Druckluft gefüllten Arbeitsraum 4 wenigstens teilweise und rollt im Betrieb unter Ausbildung wenigstens einer nicht dargestellten Rollfalte an dem ebenfalls nicht gezeigten Luftfederkolben ab. Der Luftfederbalg 3 weist an seinem luftfederdeckelseitigen offenen Ende einen als Ring ausgebildeten, im Axialschnitt des Luftfederkörpers kreisförmigen Wulst 5 auf. In den Wulst 5 ist ein Kern 12 eingelegt und einvulkanisiert.

Der Kern 12 kann beispielsweise ein torusförmiger Volldrahtkern sein. Alternativ dazu sind auch dehnbare oder nichtdehnbare andere Materialien möglich, wie beispielsweise Kunststoffe oder Elastomere als Kernmaterialien. Außerdem kann der Kern 12 als in dessen Umfangsrichtung geschlossener oder offener Ring ausgebildet sein.

Der Luftfederbalg 3 kann mit einem nicht dargestellten, in das Elastomer eingelegten Gewebe als Festigkeitsträger verstärkt sein, wobei der Festigkeitsträger vorzugsweise an dem Kern 12 verankert sein kann. Der Luftfederdeckel 2 weist radial innen ein erstes Luftfederdeckelteilstück 6 auf, welches als ein napfförmiger, nach axial innen ausgeformter Abschnitt des Luftfederdeckels 2 ausgebildet ist und mit seiner kreisförmigen Wand in Axialrichtung der Luftfeder verläuft. Außerdem ist ein als Verschlussring ausgebildetes erstes Verschlusselement 7 axial innerhalb des Luftfederdeckels 2 und radial außen benachbart zu dem napfförmigen Luftfederdeckelteilstück 6 des Luftfederdeckels 2 angeordnet.

Der Wulst 5 des Luftfederbalgs 3 ist in einem zweiteiligen Sitz 8 angeordnet, welcher durch das Verschlusselement 7 und den Luftfederdeckel 2, genauer gesagt durch das Luftfederdeckelteilstück 6 gemeinsam gebildet wird und abschnittsweise im Axialschnitt des Luftfederkörpers eine kreissegmentförmige Kontur aufweist. Demnach weist das Luftfederdeckelteilstück 6 im Axialschnitt eine kreissegmentförmige erste Sitzfläche 9 auf, welche nach radial außen hin offen ist. Das Verschlusselement 7 weist im Axialschnitt eine dazu passende kreissegmentförmige zweite Sitzfläche 10 auf, welche nach radial innen hin offen ist. Die beiden Sitzflächen 9, 10 haben daher in dreidimensionaler Betrachtung eine kreisrillenfömige Geometrie. Die beiden Sitzflächen 9, 10 sind hierzu als Hinterschneidungen des Luftfederdeckelteilstück 6 beziehungsweise des Verschlusselements 7 ausgebildet.

Der Wulst 5 des Luftfederbalgs 3 ist in dem Sitz 8 angeordnet und schmiegt sich mit seiner radialen Innenseite an die erste Sitzfläche 9 beziehungsweise mit seiner radialen Außenseite an die zweite Sitzfläche 10. Der durch die beiden Sitzflächen 9, 10 offengelassene, dazwischen ausgebildete Freiraum zwischen den beiden Sitzflächen 9, 10 nimmt die Balgwand 11 des Luftfederbalgs 3 auf und ist entsprechend der Wandstärke des Luftfederbalgs 3 dimensioniert.

Das ringförmige Verschlusselement 7 ist auf den Luftfederbalg 3 gesteckt und wird unter dem in dem Arbeitsraum 4 herrschenden Innendruck unter Ausbildung einer sich um die Kontur des Verschlusselements 7 herum legenden Rollfalte gegen den Luftfederdeckel 2 gedrückt. Die Kontur des Verschlusselements 7 ist hier entsprechend der Faltenlegung des Luftfederbalgs 3 axial zurückgenommen ausgebildet. Dadurch wird der Wulst 5 in den Sitz 8 sowie gegen den Luftfederdeckel 2 gedrückt, wodurch der Arbeitsraum 4 des Luftfederbalgs 3 dauerhaft gegen den Luftfederdeckel 2 druckdicht ist. Zugleich ist der Wulst 5 gegen ein Abziehen aus dem Sitz 8 durch Zugkräfte, welche im Betrieb der Luftfeder 1a in Axialrichtung erzeugt werden und an der Balgwand 11 und an dem Wulst 5 angreifen, gesichert. Das radial äußere Ende 13 des ringförmigen Verschlusselements 7 ist radial verbreitert ausgebildet und liegt flächig an der Unterseite des Luftfederdeckels 2 an, so dass es durch die Zugkraft auf den Luftfederbalg 3 nicht verdrillt werden kann. Dadurch ist der Sitz 8 für den Wulst 5 zusätzlich gegen ein Öffnen im Betrieb gesichert. Außerdem ist das Verschlusselement 7 radial außen dünner als radial innen, wodurch für den Luftfederbalg 3 ein größerer Federweg zur Verfügung steht.

Die Fig. 2 zeigt eine zweite Luftfeder 1b, bei der an dem Außenumfang des Luftfederdeckels 2 ein Clips- oder Bördelrand 15 ausgebildet ist. Der Clips- oder Bördelrand 15 hintergreift das als Verschlussring ausgebildete Verschlusselement 7 formschlüssig. Dadurch wird der Wulst 5 in seinem Sitz 8 radial verspannt und das Verschlusselement 7 an dem Luftfederdeckel 2 unabhängig vom Vorliegen eines Balginnendrucks gehalten. Das Verschlusselement 7 ist bei diesem Ausführungsbeispiel nicht wie bei der Luftfeder 1a gemäß Fig. 1 zum Luftfederbalg 3 hin mit einer sich verjüngenden Kontur ausgeführt, sondern weist eine durchgehend gleiche Dicke auf, wodurch das Verschlusselement 7 steifer ausgebildet ist. Der Luftfederbalg 3 kann bei dieser Ausführungsvariante dadurch auch nicht unerwünscht gegen den Clips- oder Bördelrand 15 des Luftfederdeckels 2 stoßen.

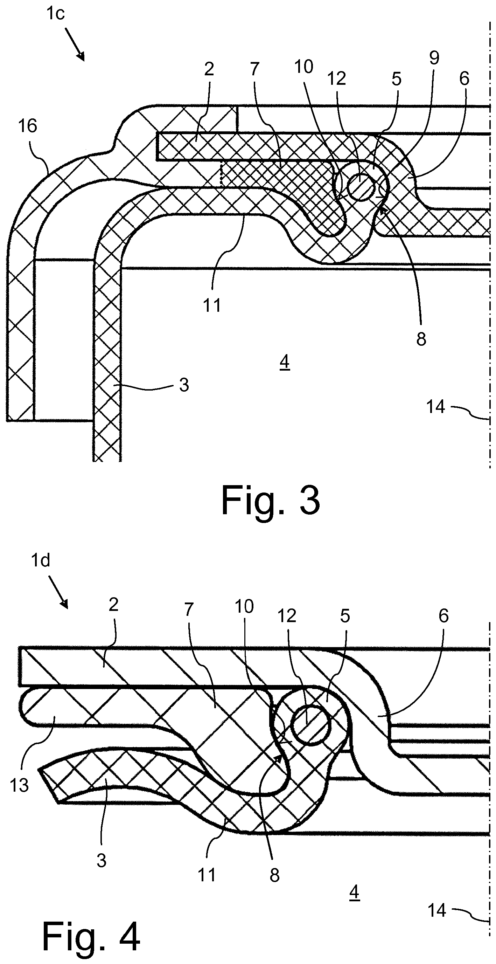

Fig. 3 zeigt eine dritte Luftfeder 1c, bei der am Außenumfang des Luftfederdeckels 2 ein zylindrischer Schutzstutzen 16 ausgebildet ist. Der Schutzstutzen 16 umgreift mit seinem gabelartig ausgebildeten radial inneren Ende formschlüssig das radial äußere Ende des Luftfederdeckels 2 und ist dadurch an dem Luftfederdeckel 2 befestigt. Außerdem hält der Schutzstutzen 16 das als Verschlussring ausgebildete Verschlusselement 7 in seiner vorgesehenen Position und schützt gegen Eintragungen von Schmutzpartikeln in den Befestigungsbereich des Luftfederbalgs 3 am Luftfederdeckel 2.

Die Fig. 4 zeigt eine vierte Luftfeder 1d, welche weitgehend baugleich wie die erste Luftfeder 1a gemäß Fig. 1 ausgeführt ist, bei der allerdings auf eine kreissegmentförmige Sitzfläche am Luftfederdeckelteilstück 6 verzichtet wurde. Ein sitzbildendes Felgenhorn ist demnach nur am Verschlusselement 7 ausgebildet. Dadurch lässt sich der Luftfederbalg 3 leichter am Luftfederdeckel 2 montieren. Der Wulst 5 des Luftfederbalgs 3 sitzt demnach im montierten Zustand zwar lediglich auf der kreissegmentförmigen Sitzfläche 10 des Verschlusselements 7, er liegt aber nach wie vor an der radialen Außenseite des napfförmigen Luftfederdeckelteilstücks 6 an, so dass ein zweiteiliger Wulstsitz realisiert ist.

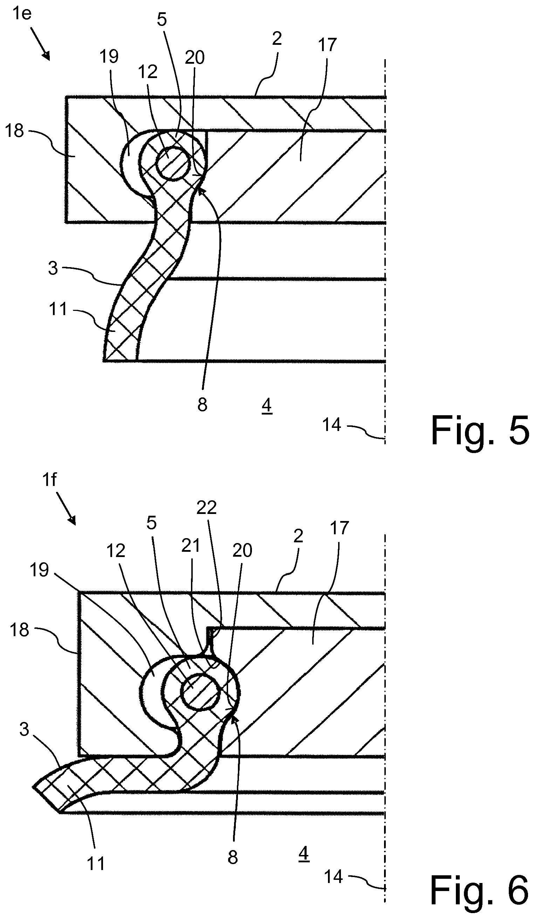

Fig. 5 zeigt eine fünfte Luftfeder 1e, bei der anstelle eines als Verschlussrings ausgebildeten Verschlusselements ein als Verschlussscheibe ausgebildetes zweites Verschlusselement 17 sowie anstelle eines napfförmigen Luftfederdeckelteilstücks ein radial außen hakenförmig konturiertes zweites Luftfederdeckelteilstück 18 angeordnet sind. Das Verschlusselement 17 ist radial innerhalb des Luftfederbalgs 3 angeordnet und weist eine dritte kreissegmentförmig konturierte Sitzfläche 20 auf, an welche sich die radiale Innenseite des Wulstes 5 schmiegt. Das Verschlusselement 17 weist dabei eine glockenähnliche Umfangskontur auf. Das radial außen gelegene Luftfederdeckelteilstück 18 umgreift den Wulst 5 hakenförmig mit einem hier überhöht dargestellten, dazwischen ausgebildeten Freiraum 19, in den der Wulst 5 beim Einpressen des Verschlusselements 17 etwas ausweichen kann. Unter einem gegenüber dem Umgebungsdruck erhöhten Balginnendruck hält das Verschlusselement 17 die Anordnung gegenüber dem Arbeitsraum 4 dicht.

Die Fig. 6 zeigt eine sechste Luftfeder 1f, die der fünften Luftfeder 1e gemäß Fig. 5 ähnelt, wobei sich die Sitzfläche 20 für den Wulst 5 jedoch bis zum Luftfederdeckel 2 hin mit einer zusätzlichen Hinterschneidung 21 erstreckt. Das Verschlusselement 17 ist also axial zweiseitig hinterschnitten ausgebildet. Das Luftfederdeckelteilstück 18 ist durch einen Absatz 22 gegenüber dem Luftfederdeckel 2 an die zweite Hinterschneidung 21 geometrisch angepasst, so dass der Wulst 5 sowohl an der erweiterten Sitzfläche 20 als auch am Luftfederdeckel 2 beziehungsweise an dem Luftfederdeckelteilstück 18 anliegt. Der Kern 12 des Wulstes 5 ist hierbei vorzugsweise dehnbar oder in Umfangsrichtung offen ausgeführt. Das als Scheibe ausgebildete Verschlusselement 17 wirkt wie ein Stopfen, welcher einerseits den Wulst 5 im Sitz 8 einpresst, andererseits selbstständig an dem Luftfederdeckel 2 hält.

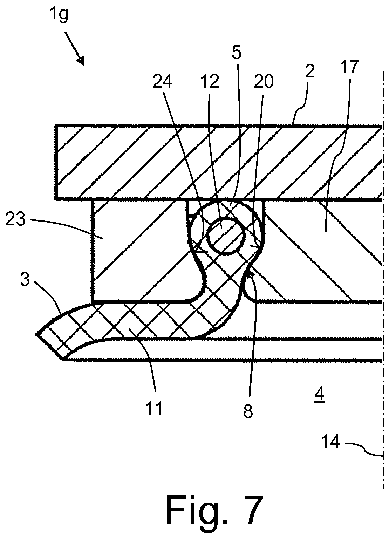

Fig. 7 zeigt eine siebte Luftfeder 1g, bei der die Befestigungs- und Dichtanordnung am Luftfederdeckel 2 dreiteilig ausgebildet ist. Demnach ist ein separates drittes Luftfederdeckelteilstück 23 vorhanden, welches vergleichbar zu dem als Verschlussring ausgebildeten Verschlusselement 7 gemäß Fig. 2 ausgebildet ist. Das dritte Luftfederdeckelteilstück 23 weist eine vierte kreissegmentförmig konturierte Sitzfläche 24 auf, an welche sich die radiale Außenseite des Wulstes 5 schmiegt. Die radiale Innenseite des Wulstes 5 schmiegt sich weiterhin an die dritte kreissegmentförmig konturierte Sitzfläche 20 des als Verschlussscheibe ausgebildeten zweiten Verschlusselements 17 an. Die beiden kreissegmentförmigen Sitzflächen 20, 24 bilden den Sitz 8 für den Wulst 5 des Luftfederbalgs 3. Das radial außen angeordnete Luftfederdeckelteilstück 23 und das radial innen angeordnete Verschlusselement 17 sind nach deren Montage mit dem Luftfederdeckel 2, welcher hier als einfache Platte vorliegt, fest verbunden, beispielsweise verschraubt. Der Wulst 5 wird somit sowohl in den Sitz 8 als auch gegen den Luftfederdeckel 2 gedrückt und dichtet den Arbeitsraum 4 luftfederdeckelseitig dauerhaft ab.

### Bezugszeichenliste

### (Teil der Beschreibung)

- 1a: Erste Luftfeder (1. Ausführungsform)
- 1b: Zweite Luftfeder (2. Ausführungsform)
- 1c: Dritte Luftfeder (3. Ausführungsform)
- 1d: Vierte Luftfeder (4. Ausführungsform)
- 1e: Fünfte Luftfeder (5. Ausführungsform)
- 1f: Sechste Luftfeder (6. Ausführungsform)
- 1g: Siebte Luftfeder (7. Ausführungsform)
- 2: Luftfederdeckel
- 3: Luftfederbalg
- 4: Arbeitsraum
- 5: Wulst des Luftfederbalgs
- 6: Erstes Luftfederdeckelteilstück (1. bis 4. Ausführungsformen)
- 7: Erstes Verschlusselement (1. bis 4. Ausführungsformen)
- 8: Sitz für den Wulst
- 9: Erste Sitzfläche des Sitzes für den Wulst (1. bis 4. Ausführungsformen)
- 10: Zweite Sitzfläche des Sitzes für den Wulst (1. bis 3. Ausführungsform)
- 11: Balgwand des Luftfederbalgs
- 12: Kern des Wulstes
- 13: Radial äußeres Ende am ersten Verschlusselement
- 14: Symmetrieachse, Längsachse der Luftfeder
- 15: Clips- oder Bördelrand am Luftfederdeckel 2
- 16: Schutzstutzen am Luftfederdeckel 2
- 17: Zweites Verschlusselement (5. bis 7. Ausführungsformen)
- 18: Zweites Luftfederdeckelteilstück (5. und 6. Ausführungsformen)
- 19: Freiraum am Sitz des Wulstes
- 20: Dritte Sitzfläche für den Wulst (5. bis 7. Ausführungsformen)
- 21: Zusätzliche Hinterschneidung am zweiten Verschlusselement
- 22: Absatz am zweiten Luftfederdeckelteilstück 18
- 23: Drittes Luftfederdeckelteilstück (7. Ausführungsform)
- 24: Vierte Sitzfläche für den Wulst (7. Ausführungsform)

## Patentansprüche

1. Luftfeder (1a, 1b, 1c, 1d, 1e, 1f, 1g), die mit einem Luftfederdeckel (2) und einem Luftfederkolben zwischen zwei gegeneinander abgefederten Bauteilen eingespannt ist, und die einen elastischen Luftfederbalg (3) aufweist, der mit seinen beiden offenen Enden an dem Luftfederdeckel (2) beziehungsweise an dem Luftfederkolben dichtend befestigt ist, einen mit Druckluft gefüllten Arbeitsraum (4) wenigstens teilweise begrenzt und unter Ausbildung wenigstens einer Rollfalte an dem Luftfederkolben abrollt, wobei zumindest ein Ende des Luftfederbalgs (3) als ein Wulst (5) ausgebildet ist, welcher in einem den Arbeitsraum (4) gegenüber dem Luftfederdeckel (2) dichtenden Sitz (8) angeordnet ist, wobei der Wulst (5) des Luftfederbalgs (3) im Axialschnitt der Luftfeder zumindest teilweise kreisförmig ausgebildet ist, wobei der Luftfederdeckel (2) ein Luftfederdeckelteilstück (6, 18, 23) aufweist, welches in Axialrichtung der Luftfeder verläuft, wobei ein Verschlusselement (7, 17) angeordnet ist, welches axial innerhalb des Luftfederdeckels (2) und radial benachbart zu dem Luftfederdeckelteilstück (6, 18, 23) angeordnet ist, wobei der Wulst (5) mittelbar oder unmittelbar mittels des Verschlusselements (7, 17) gegen den Luftfederdeckel (2) und/oder gegen das Luftfederdeckelteilstück (6, 18, 23) gespannt wird, und wobei der Sitz (8) für den Wulst (5) als ein zweiteiliger, durch das Verschlusselement (7, 17) und das Luftfederdeckelteilstück (6, 18, 23) zusammen gebildeter, zumindest teilweise kreisförmiger Sitz ausgebildet ist, **dadurch gekennzeichnet, dass** das Verschlusselement (7, 17) und das Luftfederdeckelteilstück (6, 18, 23) jeweils eine Sitzfläche (9, 10, 20, 24) mit einer im Axialschnitt der Luftfeder abschnittsweise kreissegmentförmigen Kontur aufweisen und der Luftfederdeckel (2) ein radial innerhalb des Luftfederbalgs (3) angeordnetes napfförmiges erstes Luftfederdeckelteilstück (6) aufweist, an dem eine erste kreissegmentförmig konturierte Sitzfläche (9) ausgebildet ist, an welche sich die radiale Innenseite des Wulstes (5) schmiegt, und dass ein erstes Verschlusselement (7) als ein Verschlussring ausgebildet ist, der radial außerhalb des Luftfederbalgs (3) angeordnet ist und an dem eine zweite kreissegmentförmig konturierte Sitzfläche (10) ausgebildet ist, an welche sich die radiale Außenseite des Wulstes (5) schmiegt.

2. Luftfeder nach Anspruch 1, **dadurch gekennzeichnet, dass** am Außenumfang des Luftfederdeckels (2) ein umlaufender Clips- oder Bördelrand (15) ausgebildet ist, welcher das als Verschlussring ausgebildete Verschlusselement (7) radial außen formschlüssig hintergreift.

3. Luftfeder nach Anspruch 1, **dadurch gekennzeichnet, dass** am Außenumfang des Luftfederdeckels (2) ein hohlzylindrischer Schutzstutzen (16) angeordnet und mit dem Luftfederdeckel (2) fest verbunden ist, wobei der Schutzstutzen (16) in Axialrichtung der Luftfeder verläuft und das als Verschlussring ausgebildete Verschlusselement (7) in sich aufnimmt.

4. Luftfeder nach einem der Ansprüche 1 bis 3, **dadurch gekennzeichnet, dass** der Luftfederdeckel (2) ein radial außerhalb des Luftfederbalgs (3) angeordnetes, den Wulst (5) hakenförmig mit einem zwischenliegenden Freiraum (19) umgreifendes zweites Luftfederdeckelteilstück (18) aufweist, und dass ein zweites Verschlusselement (17) als eine Verschlussscheibe ausgebildet ist, welche radial innerhalb des Luftfederbalges (3) angeordnet ist und an der eine dritte kreissegmentförmig konturierte Sitzfläche (20) ausgebildet ist, an welche sich die radiale Innenseite des Wulstes (5) schmiegt.

5. Luftfeder nach Anspruch 4, **dadurch gekennzeichnet, dass** sich die dritte kreissegmentförmig konturierte Sitzfläche (20) für den Wulst (5) zum Luftfederdeckel (2) hin mit einer zusätzlichen Hinterschneidung (21) erstreckt.

6. Luftfeder nach einem der Ansprüche 1 bis 5, **dadurch gekennzeichnet, dass** der Luftfederdeckel (2) ein radial außerhalb des Luftfederbalgs (3) angeordnetes, als separates Bauteil ausgebildetes und mit dem Luftfederdeckel (2) verbundenes drittes Luftfederdeckelteilstück (23) aufweist,
an dem eine vierte kreissegmentförmig konturierte Sitzfläche (24) ausgebildet ist, an welche sich die radiale Außenseite des Wulstes (5) schmiegt.

## Claims

1. Air spring (1a, 1b, 1c, 1d, 1e, 1f, 1g) which is clamped in by way of an air spring cover (2) and an air spring piston between two components which are sprung against one another, and which has an elastic air spring bellows (3) which is fastened sealingly by way of its two open ends to the air spring cover (2) and to the air spring piston, at least partially delimits a working space (4) which is filled with compressed air, and rolls on the air spring piston with the formation of at least one rolling fold, at least one end of the air spring bellows (3) being configured as a bead (5) which is arranged in a seat (8) which seals the working space (4) with respect to the air spring cover (2), the bead (5) of the air spring bellows (3) being of at least partially circular configuration in axial section of the air spring, the air spring cover (2) having an air spring cover part piece (6, 18, 23) which runs in the axial direction of the air spring, a closure element (7, 17) being arranged which is arranged axially within the air spring cover (2) and radially adjacently with respect to the air spring cover part piece (6, 18, 23), the bead (5) being stressed indirectly or directly by means of the closure element (7, 17) against the air spring cover (2) and/or against the air spring cover part piece (6, 18, 23), and the seat (8) for the bead (5) being configured as a two-part, at least partially circular seat which is formed by way of the closure element (7, 17) and the air spring cover part piece (6, 18, 23) together, **characterized in that** the closure element (7, 17) and the air spring cover part piece (6, 18, 23) in each case have a seat face (9, 10, 20, 24) with a contour which is circular segment-shaped in sections in the axial section of the air spring, and the air spring cover (2) has a bowl-shaped first air spring cover part piece (6) which is arranged radially within the air spring bellows (3) and on which a first seat face (9) is configured which is contoured in a circular segment-shaped manner and against which the radially inner side of the bead (5) bears tightly, and **in that** a first closure element (7) is configured as a closure ring which is arranged radially outside the air spring bellows (3) and on which a second seat face (10) is configured which is contoured in a circular segment-shaped manner and against which the radially outer side of the bead (5) bears tightly.

2. Air spring according to Claim 1, **characterized in that** a peripheral clip or flange edge (15) is configured on the outer periphery of the air spring cover (2), which clip or flange edge (15) engages in a positively locking manner radially to the outside behind the closure element (7) which is configured as a closure ring.

3. Air spring according to Claim 1, **characterized in that** a hollow-cylindrical protective stub (16) is arranged on the outer periphery of the air spring cover (2) and is connected fixedly to the air spring cover (2), the protective stub (16) running in the axial direction of the air spring and receiving the closure element (7) which is configured as a closure ring within itself.

4. Air spring according to one of Claims 1 to 3, **characterized in that** the air spring cover (2) has a second air spring cover part piece (18) which is arranged radially outside the air spring bellows (3) and engages in a hook-shaped manner around the bead (5) with a clearance (19) which lies in between, and **in that** a second closure element (17) is configured as a closure disc which is arranged radially within the air spring bellows (3) and on which a third seat face (20) is configured which is contoured in a circular segment-shaped manner and against which the radial inner side of the bead (5) bears tightly.

5. Air spring according to Claim 4, **characterized in that** the third seat face (20) which is contoured in a circular segment-shaped manner for the bead (5) extends with an additional undercut (21) towards the air spring cover (2).

6. Air spring according to one of Claims 1 to 5, **characterized in that** the air spring cover (2) has a third air spring cover part piece (23) which is arranged radially outside the air spring bellows (3), is configured as a separate component, is connected to the air spring cover (2), and on which a fourth seat face (24) is configured which is contoured in a circular segment-shaped manner and against which the radial outer side of the bead (5) bears tightly.

## Revendications

1. Ressort pneumatique (1a, 1b, 1c, 1d, 1e, 1f, 1g), qui est enserré avec un couvercle de ressort pneumatique (2) et un piston de ressort pneumatique entre deux composants suspendus sur ressort l'un contre l'autre, et qui présente un soufflet de ressort pneumatique élastique (3), qui est fixé de manière étanche par ses deux extrémités ouvertes au couvercle de ressort pneumatique (2) ou au piston de ressort pneumatique, délimite au moins partiellement un espace de travail (4) rempli d'air comprimé et roule sur le piston de ressort pneumatique en formant au moins un pli de roulement, au moins une extrémité du soufflet de ressort pneumatique (3) étant réalisée sous la forme d'un bourrelet (5) qui est agencé dans un siège (8) étanchéifiant l'espace de travail (4) par rapport au couvercle de ressort pneumatique (2), le bourrelet (5) du soufflet de ressort pneumatique (3) étant réalisé au moins partiellement sous forme circulaire en coupe axiale du ressort pneumatique, le couvercle de ressort pneumatique (2) présentant une partie de couvercle de ressort pneumatique (6, 18, 23) qui s'étend dans la direction axiale du ressort pneumatique, un élément de fermeture (7, 17) étant agencé, qui est agencé axialement à l'intérieur du couvercle de ressort pneumatique (2) et radialement au voisinage de la partie de couvercle de ressort pneumatique (6, 18, 23), le bourrelet (5) étant serré directement ou indirectement contre le couvercle de ressort pneumatique (2) et/ou contre la partie de couvercle de ressort pneumatique (6, 18, 23) au moyen de l'élément de fermeture (7, 17), et le siège (8) pour le bourrelet (5) étant réalisé sous la forme d'un siège au moins partiellement circulaire, formé en deux parties conjointement par l'élément de fermeture (7, 17) et la partie de couvercle de ressort pneumatique (6, 18, 23), **caractérisé en ce que** l'élément de fermeture (7, 17) et la partie de couvercle de ressort pneumatique (6, 18, 23) présentent chacun une surface de siège (9, 10, 20, 24) avec un contour en forme de segment de cercle par sections dans la section axiale du ressort pneumatique et le couvercle de ressort pneumatique (2) présente une première partie de couvercle de ressort pneumatique (6) en forme de godet agencée radialement à l'intérieur du soufflet de ressort pneumatique (3), sur laquelle est réalisée une première surface de siège (9) à contour en forme de segment de cercle, dont le côté intérieur radial du bourrelet (5) épouse la forme, et **en ce qu'**un premier élément de fermeture (7) est réalisé sous la forme d'un anneau de fermeture qui est agencé radialement à l'extérieur du soufflet de ressort pneumatique (3) et sur lequel est réalisée une deuxième surface de siège (10) à contour en forme de segment de cercle, dont le côté extérieur radial du bourrelet (5) épouse la forme.

2. Ressort pneumatique selon la revendication 1, **caractérisé en ce que** sur la circonférence extérieure du couvercle de ressort pneumatique (2) est réalisé un bord périphérique de clip ou rabattu (15) qui s'engage radialement vers l'extérieur derrière l'élément de fermeture (7) réalisé sous forme d'anneau de fermeture par accouplement de forme.

3. Ressort pneumatique selon la revendication 1, **caractérisé en ce qu'**une tubulure de protection cylindrique creuse (16) est agencée sur la circonférence extérieure du couvercle de ressort pneumatique (2) et est reliée de manière fixe au couvercle de ressort pneumatique (2), la tubulure de protection (16) s'étendant dans la direction axiale du ressort pneumatique et recevant en son sein l'élément de fermeture (7) réalisé sous forme d'anneau de fermeture.

4. Ressort pneumatique selon l'une quelconque des revendications 1 à 3, **caractérisé en ce que** le couvercle de ressort pneumatique (2) présente une deuxième partie de couvercle de ressort pneumatique (18) agencée radialement à l'extérieur du soufflet de ressort pneumatique (3), entourant le bourrelet (5) en forme de crochet avec un espace libre intermédiaire (19), et **en ce qu'**un deuxième élément de fermeture (17) est réalisé sous la forme d'un disque de fermeture qui est agencé radialement à l'intérieur du soufflet de ressort pneumatique (3) et sur lequel est réalisée une troisième surface de siège (20) à contour en forme de segment de cercle, dont le côté intérieur radial du bourrelet (5) épouse la forme.

5. Ressort pneumatique selon la revendication 4, **caractérisé en ce que** la troisième surface de siège (20) à contour en forme de segment de cercle pour le bourrelet (5) s'étend vers le couvercle de ressort pneumatique (2) avec une contre-dépouille supplémentaire (21).

6. Ressort pneumatique selon l'une quelconque des revendications 1 à 5, **caractérisé en ce que** le couvercle de ressort pneumatique (2) présente une troisième partie de couvercle de ressort pneumatique (23) agencée radialement à l'extérieur du soufflet de ressort pneumatique (3), réalisée sous forme de composant séparé et reliée au couvercle de ressort pneumatique (2),
sur laquelle est réalisée une quatrième surface de siège (24) à contour en forme de segment de cercle, dont le côté extérieur radial du bourrelet (5) épouse la forme.
